Europäisches Patentamt

European Patent Office

Office européen des brevets

(11) Publication number: **0 259 154 B1**

(12) **EUROPEAN PATENT SPECIFICATION**

(45) Date of publication of patent specification: **02.01.92** (51) Int. Cl.5: **C10G 11/18**, **B01J 8/32**

(21) Application number: **87307767.1**

(22) Date of filing: **03.09.87**

(54) **Upgrading naphtha in a single riser fluid catalytic cracking operation employing a catalyst mixture.**

(30) Priority: **03.09.86 US 903343**

(43) Date of publication of application:
**09.03.88 Bulletin 88/10**

(45) Publication of the grant of the patent:
**02.01.92 Bulletin 92/01**

(84) Designated Contracting States:
**BE DE FR GB IT NL**

(56) References cited:
**EP-A- 0 127 285**
**US-A- 3 380 911**
**US-A- 3 617 497**
**US-A- 3 928 172**

(73) Proprietor: **MOBIL OIL CORPORATION**
**150 East 42nd Street**
**New York New York 10017(US)**

(72) Inventor: **Herbst, Joseph Anthony**
**60 Bryant Road**
**Turnersville New Jersey 08012(US)**
Inventor: **Owen, Hartley**
**5 Riverview Terrace**
**Belle Mead New Jersey 08502(US)**
Inventor: **Schipper, Paul Herbert**
**1506 Berwyn Road**
**Wilmington Delaware 19810(US)**

(74) Representative: **Colmer, Stephen Gary**
**Patent Department c/o Mobil Services Company Limited Mobil Court 3 Clements Inn London WC2A 2EB(GB)**

## Description

This invention relates to a process for upgrading a naphtha, e.g., straight run naphtha, catalytically cracked naphtha (FCC gasoline), etc., and mixtures thereof, in a single rise fluid catalytic cracking operation utilizing a mixture of amorphous cracking catalyst and/or large pore crystalline cracking catalyst, e.g., zeolite Y, and a shape selective medium pore crystalline silicate zeolite catalyst, e.g., zeolite ZSM-5.

In U.S. 3,847,793, conventional FCC catalyst containing ZSM-5 is added to the base of a riser reactor to contact a heavy feed. A coking, or deactivating feed is added at mid riser, and light hydrocarbons added near the top of the riser.

In the fluid catalytic cracking process of U.S. Patent No. 4,051,013, a naphtha feed and a gas oil feed are converted in the presence of amorphous or zeolite cracking catalyst, preferably the latter, in a riser reaction zone to provide a high octane gasoline.

Several of the aforementioned processes employ a mixture of catalysts having distinctly different catalytic properties as, for example, the dual riser catalytic cracking process described in U.S. Patent No. 3,928,172 which utilizes a mixture of large pore crystalline silicate zeolite cracking catalyst, e.g., zeolite REY, and a shape selective medium pore crystalline silicate zeolite, e.g., ZSM-5. According to this process, a gas oil is cracked in a first riser in the presence of the aforesaid catalyst mixture, principally as a result of the zeolite REY component thereof, to provide a heavy naphtha product, the latter being recracked and/or a virgin straight run naphtha being cracked in a second riser in the presence of the catalyst mixture to provide a high octane gasoline product together with varying quantities of $C_3$ and $C_4$ olefins.

Despite the many advances made, there is still a need for an FCC process which can upgrade a naphtha fraction while still performing its conventional job of cracking heavy feeds.

Accordingly, the present invention provides a fluidized catalytic cracking process undertaken in a single riser which comprises introducing a heavy feed comprising $343^\circ C^+$ ($650^\circ F$) hydrocarbons and passing it up through the riser in the presence of a cracking catalyst having a settling rate in the riser to provide lighter products including naphtha products and deactivated cracking catalyst which is stripped in a catalyst stripper, regenerated in a regenerator and recycled to the riser to contact more heavy feed, characterized by:

   a. use of an additive component which contains a shape selective crystalline silicate zeolite catalyst having a higher settling rate than the settling rate of the cracking catalyst so as to reside in the riser for a longer period of time than the cracking catalyst component and introducing naphtha to the riser downstream of the heavy charge in the presence of the additive component to produce a gasoline product; and

   b. separating the additive from the cracking catalyst upstream of the regenerator and recycling directly to the riser the additive component without passing the additive component through the regenerator to reduce the residence time of the additive in the regenerator relative to the cracking catalyst and increase the residence time of the additive component in the riser reactor relative to the cracking catalyst.

   Further features of the invention are defined in claims 2 to 8.

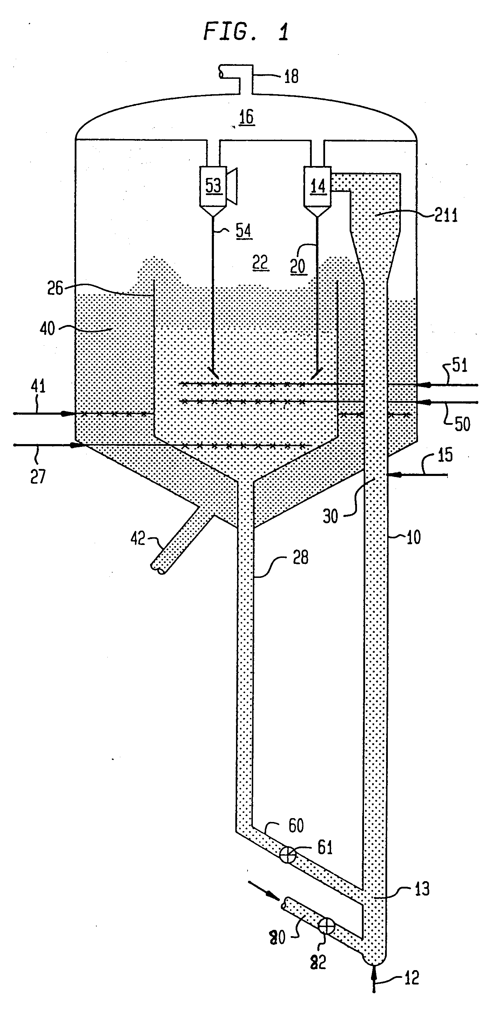

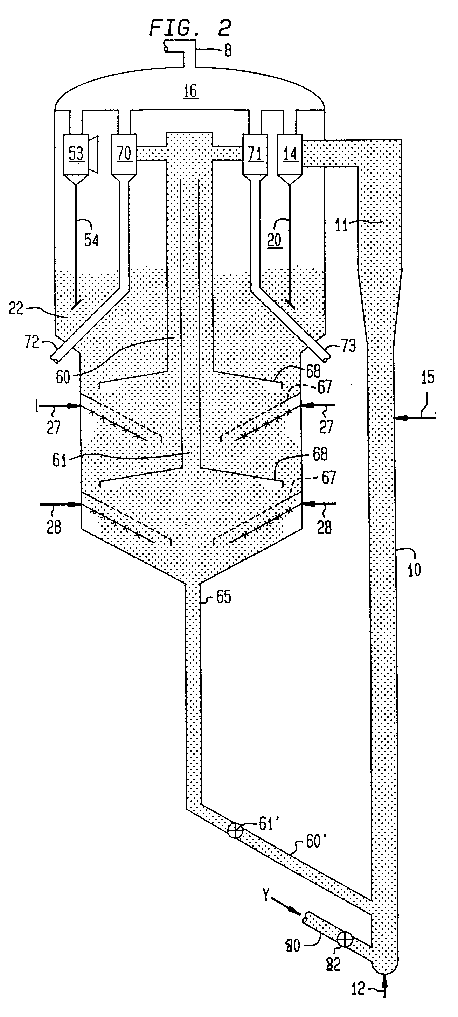

Figures 1 and 2 schematically illustrate preferred embodiments of a naphtha upgrading operation in accordance with this invention, i.e., one in which the stripping unit features means for separating the first and second catalyst components based primarily on differences in their average particle sizes and densities, such arrangements making it possible to cycle the second catalyst component without exposing it to the catalyst-degrading conditions of the regenerator.

## CONVENTIONAL FCC CATALYST

Conventional FCC catalysts are either amorphous or zeolitic. Most FCC's use zeolitic catalyst, typically a large pore zeolite, in a matrix which may or may not possess catalytic activity. These zeolites typically have crystallographic pore dimensions of 7.0 angstroms and above for their major pore opening. Zeolites which can be used in cracking catalysts include zeolite X (U.S. 2 882 244), zeolite Y (U.S. 3 130 007), zeolite ZK-5 (U.S. 3 247 195), zeolite ZK-4 (U.S. 3 314 752) to name a few, and naturally occurring zeolites such as chabazite, faujasite, mordenite, and the like. Silicon-substituted zeolites, described in U.S. 4 503 023 can also be used.

Two or more of the foregoing amorphous and/or large pore crystalline cracking catalysts can be used as the conventional catalyst. Preferred conventional catalysts are the natural zeolites mordenite and faujasite and the synthetic zeolites X and Y with particular reference given zeolites Y, REY, USY and RE-USY.

Such conventional FCC catalysts are well known.

ADDITIVE FCC CATALYSTS

The present invention permits use of an optional additive catalyst, with different properties than the conventional catalyst.

Preferred additives comprise the shape selective medium pore zeolites exemplified by ZSM-5, ZSM-11, ZSM-12, ZSM-23, ZSM-35, ZSM-38, ZSM-48 and similar materials.

ZSM-5 is described in U.S. 3,702,886, U.S. Reissue 29,948 and in U.S. 4,061,724 (describing a high silica ZSM-5 as "silicalite").

ZSM-11 is described in U.S. 3,709,979.

ZSM-12 is described in U.S. 3,832,449.

ZSM-23 is described in U.S. 4,076,842.

ZSM-35 is described in U.S. 4,016,245.

ZSM-38 is described in U.S. 4,046,859.

ZSM-48 is described in U.S. 4,375,573.

ZSM-5 is particularly preferred.

The additive zeolites can be modified in activity by dilution with a matrix component of significant or little catalytic activity. The matrix may act as a coke sink. Catalytically active, inorganic oxide matrix material is preferred because of its porosity, attrition resistance and stability under the cracking reaction conditions encountered particularly in a fluid catalyst cracking operation. The additive catalyst may contain up to 50 wt % crystalline material and preferably from 0.5 to 25 wt % in a matrix.

The matrix may include, or may be, a raw or natural clay, a calcined clay, or a clay which has been chemically treated with an acid or an alkali medium or both.

Zeolites in which some other framework element which is present in partial or total substitution of aluminium can be advantageous. For example, such catalysts may convert more feed to aromatics with higher octanes. Elements which can be substituted for part or all of the framework aluminum are boron, gallium, zirconium, titanium and other trivalent metals which are heavier than aluminum. Specific examples of such catalysts include ZSM-5 or zeolite beta containing boron, gallium, zirconium and/or titanium. In lieu of, or in addition to, being incorporated into the zeolite framework, these and other catalytically active elements can also be deposited upon the zeolite by any suitable procedure, e.g., impregnation. Thus, the zeolite can contain a hydrogen-activating function, e.g., a metal such as platinum, nickel, iron, cobalt, chromium, thorium (or other metal capable of catalyzing the Fischer-Tropsch or water-gas shift reactions) or rhenium, tungsten, molybdenum (or other metal capable of catalyzing olefin disproportionation).

RISER ELUTRIATION

When an elutriatable catalyst is charged to the process of the present invention, it is preferred to have a riser elutriation zone. This can be a zone at either the bottom or top of the riser of increased cross-sectional area. The increased cross-sectional area results in lower specificial vapor velocity in the riser, which allows the catalyst (preferably the additive) with the highest settling velocity to remain longer in the riser.

As a general guideline, the feed rate, riser cross-sectional area, and additive catalyst properties should be selected so that the additive catalyst settling rate approaches the superficial vapor velocity expected in the riser.

Riser expansion to handle increased molar volumes in the riser reactor would not change superficial vapor velocity and would not produce significant elutriation. Conversely, a constant diameter riser would provide elutriation at the base of the riser.

STRIPPER ELUTRIATION

When an elutriatable catalyst mixture is used, it is preferred to operate with a catalyst stripper which separates more from less elutriatable catalyst.

Separation in the stripper can be achieved by particle size difference alone, i.e., a sieve action. Preferably a stripper is used which separates conventional catalyst from additive catalyst by exploiting differences in settling velocity - such a design is shown in Figure 2.

A closely related approach is one which relies to some extent on settling properties and to some extent on catalyst density, as shown in Figure 1.

Stripper elutriation separates additive catalyst from conventional catalyst upstream of the catalyst regenerator. If elutriation occurred in the catalyst regenerator, then the additive catalyst (which may not need regeneration and may be damaged by regeneration) is unnecessarily subjected to regeneration. Thus stripper elutriation significantly reduces additive catalyst residence time in the FCC regenerator.

Additional elutriation may occur in the FCC regenerator, by means not shown, however, it is the goal of the present invention to keep the additive out of the regenerator. Regenerator elutriation would minimize damage to additive catalyst and may be a beneficial way of quickly removing from the generator small amounts of additive which will spill over into the regenerator.

Riser elutriation, and stripper elutriation, preferably with the additive catalyst being a denser catalyst which settles rapidly, minimize loss of additive catalyst with catalyst fines. If elutriating cyclones were used to separate a light, readily elutriable additive from reactor effluent prior to discharge from the reaction vessel, then there would be a significant increase in loss of additive catalyst with fines. There would also be a significant dilution effect caused by accumulation of conventional catalyst finds with more elutriatable additives. Finally use of a light additive would reduce the residence time of the additive in the FCC riser reactor, because it would tend to be blown out of the reactor faster than the conventional catalyst.

Among the techniques which can be used for making one catalyst component more dense than the other is compositing each catalyst with a matrix component of substantially different density. Useful matrix components include the following:

| matrix component | particle density (gm/cm$^3$) |
|---|---|
| alumina | 3.9 - 4.0 |
| silica | 2.2 - 2.6 |
| magnesia | 3.6 |
| beryllia | 3.0 |
| barium oxide | 5.7 |
| zirconia | 5.6 - 5.9 |
| titania | 4.3 - 4.9 |

Combinations of two or more of these and/or other suitable porous matrix components, e.g., silica-alumina, silica-magnesia, silica-thoria, silica-alumina-zirconia, etc., can be employed for a still wider spectrum of density values from which one may select a specific predetermined value as desired.

In general, selection of each matrix component will be such that the catalyst which is to have the lower rate of circulation through the regenerator will be more dense than the catalyst requiring frequent regeneration. For example, in the case of a mixed catalyst system containing medium pore and large pore crystalline silicate zeolites where it is desired to increase the residency time of the medium pore zeolite catalyst in the riser, the overall packed density of the medium pore zeolite catalyst particles inclusive of its matrix component can advantageously vary from 0.6 to 4.0 gm/cm$^3$, and preferably from 2.0 to 3.0 gm/cm$^3$, and the overall packed density of the large pore zeolite catalyst particles inclusive of its matrix component can advantageously vary from 0.4 to 1.1 gm/cm$^3$ density, and preferably from 0.6 to 1.0 gm/cm$^3$.

The shape selective medium pore crystalline silicate zeolite catalyst can be present in the mixed catalyst system over widely varying levels. For example, the zeolite in the second catalyst component can be present at a level as low as 0.01 to 1.0 weight percent of the total catalyst inventory (as in the case of the catalytic cracking process of U.S. Patent No. 4,368,114) and can represent as much as 25 weight percent of the total catalyst system.

Suitable charge stocks for cracking in the riser comprise the hydrocarbons generally and, in particular, gas oils, thermal oils, residual oils, cycle stocks, whole top crudes, tar sand oils, shale oils, synthetic fuels, heavy hydrocarbon fractions derived from the destructive hydrogenation of coal, tar, pitches, asphalts, hydrotreated feedstocks derived from any of the foregoing, and the like.

"Naphtha" means any $C_5$ to 232°C (450°F) hydrocarbon charge. Examples of suitable naphtha charge materials include coker naphtha, visbreaker naphtha, pyrolysis naphtha (from an ethylene operation), straight run naphtha and catalytically cracked naphtha. Such charge materials are generally unsuitable for use as motor fuel or motor fuel components because of their relatively low octane rating, poor stability, high contaminant levels of sulfur or nitrogen or both or any combination of these characteristics.

Figures 1 and 2 each described the stripping section of a single riser fluidized cracking unit provided with means for separating particles of ZSM-5 catalyst from particles of zeolite Y catalyst based primarily upon the difference in the densities of these two types of catalyst components. The riser component of the fluidized cracking units shown in Figs. 1 and 2 is of a preferred type, i.e., its cross-sectional geometry has been modified for a portion of its length so as to alter the linear velocity of the fluid stream in the modified region. The purpose of this feature is to further prolong the residency time of the ZSM-5 catalyst particles, which are both larger and of greater density than the zeolite Y catalyst particles, in the riser. Thus, as

EP 0 259 154 B1

shown, the upward flow of the fluid stream containing gaseous conversion products and both catalyst components encounters an outwardly flared region 11 which contains a large percentage of the ZSM-5 catalyst particles of the mixed catalyst system. The ZSM-5 catalyst particles occupying this region possess a combination of density, average particle size and perhaps even shape such that the linear velocity of the suspension in this region which would tend to carry the ZSM-5 catalyst particles up and out of riser is in approximate balance with the settling rate of these particles. Such being the case, the ZSM-5 catalyst particles, or at least the bulk of them, remain more or less stationary, or suspended, in region 11 of riser 10 where they catalyze a variety of other conversions involving the hydrocarbons present in this region including selective cracking of the naphtha charge to light olefins such as $C_{3-6}$ olefins as well as oligomerization, alkylation, isomerization, aromatization, etc., the result of which, as previously indicated, the production of a gasoline product of increased RON and MON. Meanwhile, the particles of spent catalyst zeolite Y, being less dense, smaller and/or more regular in shape than the ZSM-5 particles, continue past flared region 11 together with the gasiform products of conversion and are ultimately discharged from the top of the riser into one or more cyclonic separation zones adjacent the second riser discharge as represented by cyclone separator 14 provided with dipleg 20.

Although as indicated earlier, the ZSM-5 catalyst particles have an initially greater average particle size and density than that of the zeolite Y catalyst particles and therefore can be made to form a zone of concentration in the flared upper section 11 of riser 10, eventually they will become reduced in size due to the inevitable particle collisions which constantly take place in the system. As time goes, more and more of the ZSM-5 catalyst particles will enter catalyst bed 22 where, however, their higher density permits them to be separated by a variety of arrangements, two of which are shown in Figs. 1 and 2.

Fig. 1, shows a riser reactor 10 provided with a gas oil feed boiling in the range of 316 to 649°C (600°F and 1200°F) introduced into lower region 13 through conduit 12. The gas oil combines with hot regenerated zeolite Y catalyst particles conveyed through conduit 80 provided with flow control valve 22 and with ZSM-5 catalyst particles transferred directly from vessel 26 through line 60 provided with flow control valve 61 to form a suspension. The conversion conditions within the lower region of riser 10 can be varied depending upon whether it is desired to maximize production of naphtha or light olefins, principally $C_3$ and $C_4$ olefins. To emphasize the production of naphtha, the ZSM-5 zeolite concentration in the second catalyst component can be from .01 to 10, and preferably from 0.1 to 5.0, wt % of the total catalyst mixture and the temperature can be 482 to 621°C (900 to 1150°F) and preferably 496 to 538°C (925 to 1000°F), the catalyst to oil ratio can range from 3:1 to 20:1 and preferably from 4:1 to 10:1 and the catalyst contant time can range from 0.5 to 30 seconds and preferably from 1 to 15 seconds. When, however, light olefin production (at the expense of naphtha) is desired, the ZSM-5 zeolite concentration of the second catalyst component can comprise from 0.5 to 25, and preferably from 1 to 10, weight percent of the total catalyst mixture, the temperature, catalyst to oil ratio and catalyst contact time being selected from the aforementioned ranges. During passage of the suspension through the lower region of the riser, conversion of the gas oil feed to lower and higher boiling products occurs.

A naphtha feed, e.g., a catalytically cracked naphtha and/or a straight run naphtha, introduced further up riser 10 in region 30 through conduit 15 combines with the ascending catalyst-hydrocarbon vapor mixture at a temperature of 510 to 677°C (950 to 1250°F). The point of introduction of the naphtha in riser 10 will be determined to a large extent by the degree to which the zeolite Y catalyst has become inactive due to coking. In general, the naphtha will be introduced in a higher region of the riser where the spent zeolite Y catalyst, having little of its activity remaining, will not participate to any significant step in the conversion of the naphtha co-feed to other products, such conversion being left largely to the influence of the ZSM-5 catalyst component. A variety of reactions characteristic of those catalyzed by ZSM-5 will therefore predominate in this higher region of the riser. Thus, selective cracking of naphtha to lighter material, largely light olefins both within and outside of gasoline boiling range, and conversion of light olefins via oligomerization, cyclization, aromatization, alkylation, etc., all contribute to the production of a quality gasoline product of relatively high octane rating. The catalyst-hydrocarbon suspension continues to ascend riser 10, enters flared region 11 (which, as previously explained, serves to further prolong the residency time of larger, denser particles of ZSM-5 catalyst in the riser) and from there passes to cyclone separator 14 which separates catalyst particles from gases, the former entering catalyst bed 22 via dipleg 20 and the latter entering plenum chamber 16 for transfer through conduit 18 to a downstream product separation facility (not shown). Vessel 26 which occupies an approximately central region of the stripping zone is provided with a source of stripping gas, e.g., steam, supplied through conduit 27 in the lower section thereof. The particles of ZSM-5 catalyst, being of greater average density than the zeolite Y catalyst particles, tend to gravitate toward and concentrate at the bottom of vessel 26 and, following stripping, to enter return conduit 60 for return to riser 10. Meanwhile, the ascending current of stripping gas and desorbed hydrocarbonaceous

5

material acts as a lift medium tending to carry lower density particles of zeolite Y catalyst out of vessel 26 into an outer peripheral region 40 the lower section of which is provided with its own supply of stripping gas, again, e.g., steam, through conduit 41. Stripping gas and other gasiform material is then separated from catalyst particles in cyclone separator 53, the former passing to plenum chamber 16 and the latter entering catalyst bed 22 via dipleg 54. Stripped, spent zeolite Y catalyst continues its downward flow movement and is withdrawn from the stripper through conduit 42 where it is conveyed to the regenerating zone.

In order to enhance the overall efficiency of the operation, a light olefin feed, e.g., a gas rich in ethylene and/or propylene, can be introduced into catalyst bed 22 in the lower region thereof through conduit 50 to produce higher weight products and an exotherm which improves the desorption efficiency of the stripping operation. In general, the quantity of light olefin feed should increase the temperature of the catalyst bed by at least $28°C$ ($50°F$), and preferably by at least $56°C$ ($100°F$). To accomplish this, from 0.5 to 20, and preferably from 1 to 10, weight percent of light olefin feed can be introduced into this phase by weight of total catalyst present in the stripper.

The temperature of catalyst bed 22 will increase from 471 to $621°F$ (880 to $1150°F$) and 499 to $677°C$ (930 to $1250°F$) and even higher. This increase in spent catalyst bed temperature significantly enhances the stripping, or desorption, of hydrocarbons and, where present, sulfur compounds, which are entrained by the catalyst particles. It is possible to increase the recovery of such entrained hydrocarbons by from 5 to 30 weight percent or more compared to substantially the same stripping procedure carried out in the absence of the exothermic conversion reaction herein. Optionally, where the light olefin feed in line 50 is predominantly made up of ethylene, one or more other highly reactive light olefins, e.g., propylene, butylene or mixtures thereof, can be introduced into the lower region of catalyst bed 22 through a separate conduit 51 in order to take advantage of the higher partial pressure of the ethylene contained in the feed stream introduced through line 50 located therebelow. Amounts of $C_3$ and/or $C_4$ olefin material ranging from 0.1 to 5, and preferably from 0.2 to 3, weight percent of the entire catalyst bed can be suitably employed.

Gasiform products from the riser and the stripping operations in vessel 26 and peripheral region 40 are ultimately conveyed to plenum chamber 16 and from there pass through conduit 18 to a downstream separation facility (not shown).

The embodiment of the process shown in Fig. 2 is essentially like that described in connection with Fig. 1 except for the manner in which the comparatively denser particles of ZSM-5 catalyst are separated from the zeolite Y catalyst particles in the stripper. Descending catalyst bed 22 situation within an outer region of the stripping zone encounters streams of stripping gas, e.g., steam, introduced through conduits 27 and 28 which tends to lift the less dense particles of zeolite Y catalyst up concentrically arranged vertical conduits 60 and 61, respectively. The more dense particles of ZSM-5 catalyst continue to flow downwardly where they eventually enter return conduit 65 for return to riser 10. The source of stripping gas is advantageously placed below perforated baffles 67 so that the gas tends to force the less dense zeolite Y catalyst particles towards baffles 68, the latter guiding the flow of the zeolite Y catalyst particles up conduits 60 and 61. The upper section of conduits 60 and 61 lead to one or more cyclone separators 70 and 71 which convey the separated spent zeolite Y catalyst particles through conduits 72 and 73 to the regenerator.

In these embodiments much of ZSM-5 catalyst particles bypass the regenerator altogether. As a result, the ZSM-5 catalyst particles can be retained in the catalyst inventory at a relatively high level of activity therein for a longer average period of time than would be the case were the circulation rate of the ZSM-5 catalyst particles the same as or similar to that of the zeolite Y catalyst particles.

## Claims

1. A fluidized catalytic cracking process undertaken in a single riser which comprises introducing a heavy feed comprising $343°C^+$ ($650°F$) hydrocarbons and passing it up through the riser in the presence of a cracking catalyst having a settling rate in the riser to provide lighter products including naphtha products and deactivated cracking catalyst which is stripped in a catalyst stripper, regenerated in a regenerator and recycled to the riser to contact more heavy feed, characterized by:

a. use of an additive component which contains a shape selective crystalline silicate zeolite catalyst having a higher settling rate than the settling rate of the cracking catalyst so as to reside in the riser for a longer period of time than the cracking catalyst component and introducing naphtha to the riser downstream of the heavy charge in the presence of the additive component to produce a gasoline product; and

b. separating the additive from the cracking catalyst upstream of the regenerator and recycling directly to the riser the additive component without passing the additive component through the regenerator to reduce the residence time of the additive in the regenerator relative to the cracking catalyst and increase the residence time of the additive component in the riser reactor relative to the cracking catalyst.

2. The process of claim 1 further chracterized in that the additive is separated from the cracking catalyst by elutriation.

3. The process of claim 2 further characterized in that catalyst elutriation is effected in the top of the riser by providing the riser reactor with an enlarged portion near the outlet of the riser.

4. The process of claim 2 further characterized by elutriating catalyst in the catalyst stripper.

5. The process of claim 1 further characterized in that the additive has a different size than the cracking catalyst and the catalyst stripper acts as a sieve to separate additive from cracking catalyst.

6. The process of claim 3 further characterized in that the additive and cracking catalysts contact a stripping gas having a superficial vapor velocity sufficient to effect a separation by elutriation of the additive catalyst from the cracking catalyst due to the different settling rates.

7. The process of claim 1 further characterized in that the average particle size of the cracking catalyst ranges from 20 to 150 $\mu$m and the average particle size of the additive ranges from 500 to 70,000 $\mu$m.

8. The process of claim 1 further characterized in that the average packed density of the cracking catalyst ranges from 0.4 to 1.1 gm/cm$^3$ (400 to 1100 kg/m$^3$) and the average packed density of the additive ranges from 0.6 to 4.0 gm/cm$^3$ (600 to 4,000 kg/m$^3$).

**Revendications**

1. Procédé de craquage catalytique fluide, mis en oeuvre dans une colonne montante unique, qui consiste à introduire une charge lourde comprenant des hydrocarbures 343$^\circ$C$^+$ (650$^\circ$F) et à l'envoyer dans la colonne montante en présence d'un catalyseur de craquage ayant dans la colonne montante une certaine vitesse de décantation, pour donner des produits plus légers, qui comprennent des produits de type naphta et un catalyseur de craquage désactivé, qui est séparé dans un séparateur de catalyseur, régénéré dans un régénérateur et recyclé à la colonne montante pour entrer en contact avec une charge plus lourde, caractérisé en ce qu'il consiste:
   a. à utiliser un additif catalytique, qui contient un catalyseur zéolitique du type silicate cristallin à sélectivité de forme ayant une vitesse de décantation plus élevée que la vitesse de décantation du catalyseur de craquage, de façon qu'il séjourne dans la colonne montante pendant un laps de temps plus long que le catalyseur de craquage, et à introduire dans la colonne montante en aval de la charge lourde, en présence dudit additif catalytique, un naphta pour produire une essence; et
   b. à séparer l'additif catalytique du catalyseur de craquage en amont du régénérateur et à recycler directement à la colonne montante l'additif catalytique sans le faire passer par le régénérateur, pour réduire la durée de séjour de l'additif catalytique dans le régénérateur par rapport à celle du catalyseur de craquage et augmenter la durée de séjour de cet additif catalytique dans le réacteur à colonne montante par rapport à celle du catalyseur de craquage.

2. Le procédé selon la revendication 1, caractérisé en outre en ce que l'additif est séparé du catalyseur de craquage par élutriation.

3. Le procédé selon la revendication 2, caractérisé en outre en ce que l'élutriation du catalyseur est mise en oeuvre en tête de la colonne montante, qui est pourvue d'une portion évasée au voisinage de l'orifice de sortie de la colonne montante.

4. Le procédé selon la revendication 2, caractérisé en outre par une élutriation du catalyseur dans le séparateur de catalyseur.

5. Le procédé selon la revendication 1, caractérisé en outre en ce que l'additif a une granulométrie différente de celle du catalyseur de craquage, le séparateur de catalyseur agissant comme un tamis pour séparer l'additif du catalyseur de craquage.

**6.** Le procédé selon la revendication 3, caractérisé en outre en ce que l'additif catalytique et le catalyseur de craquage entrent en contact avec un gaz séparateur ayant une vitesse superficielle de vapeur suffisante pour provoquer une séparation, par élutriation, de l'additif catalytique et du catalyseur de craquage, en conséquence des vitesses de décantation différentes.

**7.** Le procédé selon la revendication 1, caractérisé en outre en ce que la granulométrie moyenne du catalyseur de craquage est comprise entre 20 et 150 $\mu$m et que la granulométrie moyenne de l'additif est comprise entre 500 et 70 000 $\mu$m.

**8.** Le procédé selon la revendication 1, caractérisé en outre en ce que la masse volumique moyenne après tassement du catalyseur de craquage est comprise entre 0,4 et 1,1/cm$^3$ (entre 400 et 1100 kg/m$^3$), et que la masse volumique moyenne après tassement de l'additif est comprise entre 0,6 et 4,0 g/cm$^3$ (entre 600 et 4 000 kg/m$^3$).

**Patentansprüche**

**1.** Katalytisches Wirbelschichtcrackverfahren, das in einem einzelnen Riser vorgenommen wird, das die Einführung einer schweren Zufuhr, die 343$^\circ$C$^+$ (650$^\circ$F)-Kohlenwasserstoffe umfaßt, und das Leiten dieser durch den Riser in Gegenwart eines Crackkatalysators umfaßt, der eine Absetzgeschwindigkeit im Riser aufweist, um leichtere Produkte einschließlich Benzinprodukte und deaktivierten Crackkatalysator zu schaffen, der im Katalysatorstripper gestrippt, in einem Regenerator regeneriert und zum Riser zum Kontakt einer weiteren schweren Zufuhr rezirkuliert wird, gekennzeichnet durch:
(a) Verwendung einer Zusatzkomponente, die einen formselektiven kristallinen Silikatzeolith-Katalysator umfaßt, der eine größere Absetzgeschwindigkeit als die Absetzgeschwindigkeit des Crackkatalysators aufweist, so daß er über einen längeren Zeitraum als die Crackkatalysator-Komponente im Riser verweilt, und Einführung von Rohbenzin in den Riser stromabwärts der schweren Beschickung in Gegenwart der Zusatzkomponente, um das Benzinprodukt zu erzeugen; und
(b) Abtrennung des Zusatzes vom Crackkatalysator stromaufwärts des Regenerators und direkte Rezirkulierung der Zusatzkomponente zum Riser, ohne daß diese Zusatzkomponente durch den Regenerator geleitet wird, um die Verweilzeit des Zusatzes im Regenerator im Verhältnis zu Crackkatalysator zu verringern und die Verweilzeit der Zusatzkomponente im Riserreaktor im Verhältnis zum Crackkatalysator zu erhöhen.

**2.** Verfahren nach Anspruch 1, weiterhin dadurch gekennzeichnet, daß der Zusatz durch Schlämmen vom Crackkatalysator abgetrennt wird.

**3.** Verfahren nach Anspruch 2, weiterhin dadurch gekennzeichnet, daß die Schlämmung des Katalysators an der Oberseite des Risers durchgeführt wird, indem der Riserreaktor in der Nähe des Auslasses des Risers mit einem vergrößerten Abschnitt versehen wird.

**4.** Verfahren nach Anspruch 2, weiterhin durch Schlämmen des Katalysators im Katalysatorstripper gekennzeichnet.

**5.** Verfahren nach Anspruch 1, weiterhin dadurch gekennzeichnet, daß der Zusatz eine andere Größe als der Crackkatalysator aufweist und der Katalysatorstripper als Sieb wirkt, um den Zusatz vom Crackkatalysator abzutrennen.

**6.** Verfahren nach Anspruch 3, weiterhin dadurch gekennzeichnet, daß der Zusatz und der Crackkatalysator mit einem Gas zum Strippen in Kontakt gebracht werden, das eine Oberflächendampfgeschwindigkeit aufweist, die ausreichend ist, um die Trennung des Zusatzkatalysators vom Crackkatalysator durch Schlämmen aufgrund der unterschiedlichen Absetzgeschwindigkeiten durchzuführen.

**7.** Verfahren nach Anspruch 1, weiterhin dadurch gekennzeichnet, daß die durchschnittliche Partikelgröße des Katalysators im Bereich von 20 - 150 $\mu$m und die durchschnittliche Partikelgröße des Zusatzes im Bereich von 500 - 70.000 $\mu$m liegen.

8. Verfahren nach Anspruch 1, weiterhin dadurch gekennzeichnet, daß die durchschnittliche Fülldichte des Crackkatalysators im Bereich von 0,4 - 1,1 g/cm$^3$ (400 - 1.100 kg/m$^3$) und die durchschnittliche Fülldichte des Zusatzes im Bereich von 0,6 - 4,0 g/cm$^3$ (600 - 4.000 kg/m$^3$) liegen.

## FIG. 1

# FIG. 2